# NEW EUROPEAN PATENT SPECIFICATION

(11) **EP 3 760 057 B2**
(45) Date of publication and mention of the opposition decision: **22.10.2025**
(45) Mention of the grant of the patent: 01.02.2023
(21) Application number: 19184688.0
(22) Date of filing: 05.07.2019
(51) Int. Cl.: A24C 5/34

(54) **THE METHOD AND DEVICE FOR CHECKING THE QUALITY OF ROD-LIKE PRODUCTS**
VERFAHREN UND VORRICHTUNG ZUR KONTROLLE DER QUALITÄT VON STABFÖRMIGEN PRODUKTEN
PROCÉDÉ ET DISPOSITIF DE VÉRIFICATION DE LA QUALITÉ DE PRODUITS EN FORME DE TIGE

(43) Date of publication of application: 06.01.2021
(73) Proprietor: International Tobacco Machinery Poland SP. Z O.O., 26-600 Radom (PL)
(72) Inventor: OKNINSKI, Michal, 26-600 Radom (PL)
(74) Representative: Markieta, Jaroslaw Franciszek

(56) References cited:
- EP-A1- 0 812 548
- EP-B1- 0 910 962
- WO-A1-2017/208103
- DE-A1- 102011 003 466
- DE-A1- 102012 216 048
- GB-A- 2 267 474
- US-A- 4 693 359
- US-A- 5 228 462
- US-A- 5 287 524
- US-A- 5 366 096
- US-A- 6 079 545
- US-A1- 2019 133 178
- US-B1- 6 394 097

## Description

The present invention relates to method and device for checking the quality of rod-like products for the tobacco industry.

For manufacturing rod-like products such as filters with a mouthpiece or multi-segment filter rods, tobacco industry uses semi-products such as filtration material rods, multi-channel rods, spongy material rods, crimped foil rods, thin-walled and thick-walled tubes and other rods, which are necessary for forming smoke flow or to give aroma. The majority of rods is wrapped in a wrapping material being a cigarette paper, edges of which are bonded together by an adhesive seam. Depending on the type of rod forming material, the wrapping material can be subject to a different force resulting from the resilience of the material being wrapped. Excessive material resilience may cause the adhesive seam to come off or break on the edge of the wrapping material. During the manufacturing process, both semi-products as finished products are moved between the machines by band conveyors, chain conveyors or are packed into containers and are moved in the containers towards their final destination. During such process, the rod-like product wrapping material is at risk of breakage, puncture or crease due to product bending. Such damages will affect negatively the quality of rod-like products. Moreover, wrapping material external surface has often overprinted a brand or type of the rod-like product intended for smoking. A correct print application and placement of the print on the wrapping material are crucial. There are also rod-like materials with perforated wrapping material on the circumference, these perforations are intended to decrease flow resistance during the smoking of rod-like product by the smoker. Such perforation must be placed properly on the product and must cover the entire product circumference.

Given the need to maintain a high quality of finished rod-like products, there is a demand for checking the external circumference surface of products and semi-products used for manufacturing thereof.

Devices for quality control of external circumference surface of rod-like products are known for their state of the art.

A device provided with a camera for checking the external surface of rod-like products during their transfer on a drum is disclosed in US patent application US 2004 0173226. To check the product's entire circumference surface, measurement is performed on the principal drum and intermediate drums. The surface of the product being invisible during the transfer on the principal drum is checked on intermediate drums.

A device with two cameras recording the image of rod-like product circumference surface is disclosed in the patent US 6 169 600. The first camera records the first half of the product surface when the product is on the first drum, and after transferring the product to the second transfer drum, the second camera records the second half of the rod-like product surface.

In the European patent EP 0 812 548 there are disclosed a method and device for checking the external surface of cigarettes transferred on a drum. Cigarette's surface is checked by several cameras set at different angles in relation to the transferred cigarette to check the largest possible circumference surface.

US 2019/133178 discloses a device and method for checking quality of rod like products for the tobacco industry according to the preamble of claims 1 and 7.

None of the solutions discussed above solves the problem of controlling the entire circumference surface of a rod-like product without the necessity of transferring to another transferring device.

A method for checking quality of rod-like products for the tobacco industry, according to the invention is comprising steps of moving rod-like products placed in a transport socket of a conveyor along an audit trail, checking the quality of a rod-like products with a scanning device placed on the audit trail. The method according to the invention is characterized in that it further comprises a step of rotating the rod-like product placed in the transport socket, during the step of checking the quality of rod-like products in the scanning area of the scanning device, using at least one track interacting with a lateral surface of the rod-like products.

Advantageously, the method according to the invention is characterized in that the track interacts through friction with the lateral surface of the rod-like product from the bottom side of the transport socket. Advantageously, the method according the invention is characterized in that the rod-like product placed in the transport socket rotates by at least 360° around its' longitudinal axis.

Advantageously, the method according to the invention is characterized in that when checking the quality of rod-like product, the rod-like product shall be sucked in by the vacuum provided by the openings in transport sockets of the conveyor.

Advantageously, the method according to the invention is characterized in that the checking the quality of rod-like products is done using a scanning device in a form of camera, scanner or other device recording a plurality of images of rod-like products at different angle positions during the rolling of rod-like products on the track.

The method according to invention is also characterized in that the step of checking the quality of rod-like products, further comprises pushing out rod-like products above the bottom surface of the socket from the bottom by the track.

A device for checking quality of rod-like products for the tobacco industry according to the invention is comprising a conveyor provided with transport sockets for moving rod-like products along the audit trail, and a scanning device for checking the quality of the rod-like product moving along the audit trail. The device according to the invention is characterized in that the device is provided with at least one track adopted to rotate rod-like products in the socket of the conveyor in the scanning area of the scanning device through interaction with a circumferential surface of the rod-like product.

Advantageously, the device according to the invention is characterized in that the scanning device is a camera, scanner or other image recording device.

Advantageously, the device according to the invention is characterized in that the track is stationary in relation to the scanning device.

Advantageously, the device according to the invention is characterized in that the track is movable in relation to the scanning device.

Advantageously, the device according to invention is characterized in that the track is provided with a contact surface of high friction coefficient interacting through friction with a circumferential surface of rod-like products preventing rod-like products from sliding during the rotation.

Advantageously, the device according to the invention is characterized in that the contact surface is toothed or made of rubber.

Advantageously, the device according to the invention is characterized in that the conveyor is a transport belt or a drum.

Advantageously, the device according to the invention is characterized in that the transport socket is provided with at least one opening feeding the vacuum to keep the rod-like product in the transport socket.

The device according to the invention is also characterized in that in scanning area, the contact surface of the track protrudes over the bottom surface of transport socket.

An advantage of the invention is the possibility of checking the entire circumferential surface of the rod-like product with the use of one monitoring device without the necessity of transferring the rod-like product to another transfer devices. Moreover, the invention is less complicated and more reliable due to the elimination of additional intermediate devices.

For better understanding, the object of the invention has been illustrated in embodiments in a drawing in which:
Fig. 1 shows a device for checking the quality of rod-like products moved on a belt with products;
Fig. 2 shows the device for checking the quality of rod-like products moved on the belt without rod-like products;
Fig. 3 shows a device for checking the quality of rod-like products moved on a belt as per the second embodiment;
Fig. 4 shows a zoomed-in fragment of the conveyor with visible tracks;
Fig. 5 shows a zoomed-in fragment of a conveyor with a visible track as a cross-section at point A-A as a lateral view;
Fig. 6 shows a device for checking the quality of rod-like products moved on a drum using a stationary track located in the bottom part of the drum;
Fig. 7 shows a zoomed-in fragment of the drum conveyor in an isometric view with a visible track;
Fig. 8 shows a device for checking the quality of rod-like products moved on a drum by a stationary track located in the top part of the drum;
Fig. 9 shows a device for checking the quality of rod-like products moved on a drum by a movable track located in the bottom part of the drum;

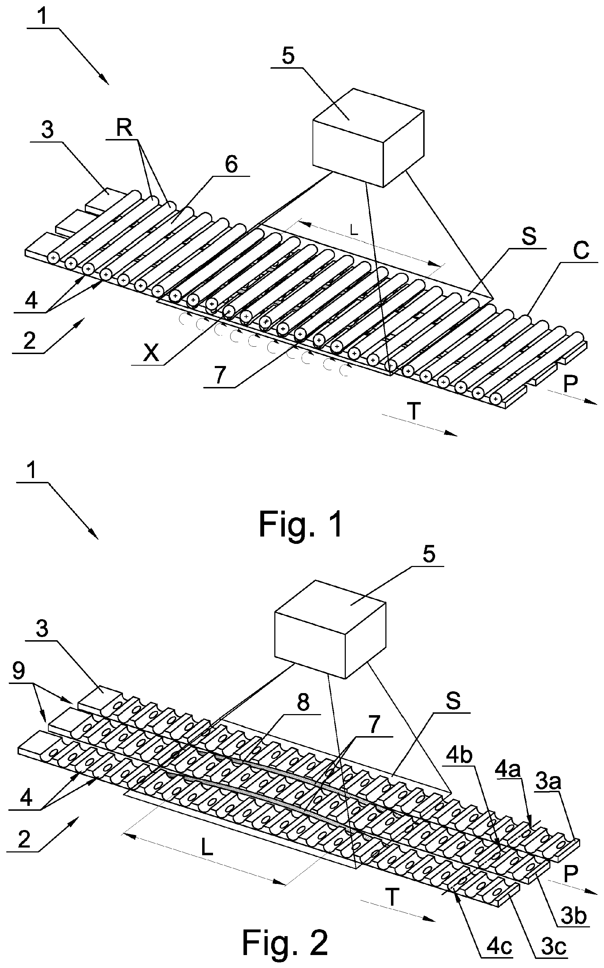

Fig. 1 shows a device 1 for checking the quality of rod-like products R with a conveyor 2 being a transport belt 3 provided with slots 4, and adapted to transport rod-like products R oriented transverse relative to direction of transportation.

Rod-like products R, are placed separately on the transport belt 3, in slots 4, and distanced one after another, generally parallel to each other. Slots 4 in form of grooves placed on the transport belt 3 generally transverse relative to the direction of transportation, and opened at one side in order to receive and transfer rod-like products.

Rod-like products R, are moved by the transport belt 3 along a particular audit trail marked with P. During the movement, rod-like products R are introduced into a scanning area S of a scanning device 5. The scanning device performs a variety of measurements of physical properties of rod-like products moving within the scanning area. Quality parameters of the scanned rod-like product are established based on the measurement of physical properties when rod-like products are transported. As the product within the scanning area moves in relation to the scanning device 5, it is possible to assess physical parameters of rod-like products under different angles, that is in different angular positions of the product, obtaining a greater number of measurements for a single rod-like product than it is the case when a single measurement in one direction is performed. The scanning device 5 can be a camera, scanner or other device recording a sequence of images. The scanning device can also perform indirect measurements of physical parameters, for direct measurement is not possible, for example it can determine a connection durability based on temperature of a weld considering a distance between the scanning area and welding location, flow velocity of rod-like products at this section, and a curve representing a function of welding durability in relation to temperature at the measurement point or in relation to temperature distribution along the weld.

Based on the sequence of images recorded at different angles it is possible to specify the spatial distribution of the investigated physical parameter within rod-like products, and thereby a more detailed specification of quality parameters of the scanned rod-like product considering the spatial distribution of the measured parameter of a rod-like product.

The scanning device 5 is placed advantageously at the opposite side of the product R in relation to the socket 4 and the conveyor 2. Measurement of physical properties can take place by recording a series of pictures of a rod-like product R, which pictures shall be processed and/or compared with a specific pattern. Based on the evaluation of the picture and specified limits of physical properties, which determine a correct rod-like product R, certain values are assigned determining further processing of the rod-like product. If a rod-like product does not meet quality requirements, it shall be rejected from the process as defective.

Alternatively, the quality analysis may involve a construction of an analytical 3D model of a rod-like product, establishing the actual geometrical shape of the rod-like product, and determination of the difference value between the 3D model of a desired product and the acquired measurements. The differential analysis may be one-dimensional or multi-dimensional, it may involve in particular directly measured values as well as derivatives.

Physical properties, which may be checked by the scanning device 5, are not limited to herewith specified properties, but may include among others: product length, diameter, product curvature, adhesive seam quality, wrapper overprint position, overprint quality, wrapper perforation position, presence of wrapper damages and/or their number or their surface area.

The movement of rod-like products through the scanning area S is not sufficient for a complete scan of rod-like products, as rod-like products are visible for the scanning device only from one side, in order to perform a complete scan of a rod-like product or a scan of the entire circumferential surface 6 of a rod-like product R, in the scanning area S, the product R is rotated at the path of a length L. The length of the path L has a value being at least equal or greater to the value of the circumference C of the product R. In the scanning area S the rod-like product R rotates around its' longitudinal axis X for an angle of at least 360° so that the scanning device 5 can scan the entire circumferential surface 6 of the product R. It is favourable if within the scanning area S, the product R performs two complete rotations around its' own longitudinal axis X. In order to rotate the rod-like product R, the device 1 has at least one track 7 placed in the scanning area S, which interacts with the lateral surface 6 of the rod-like product R, and thus rotates the rod-like product that is pushed by walls of the slot 4 and moving along the conveyor track, which is presented in more details in fig. 2.

The movement of rod-like products is caused by the friction between rod-like products R, and track 7, which is greater than the friction between the rod-like product R and lateral walls of the slot 4 pushing rod-like products. Rod-like products are elevated by the track 7 over the bottoms of the slots 4. Rod-like product elevation takes place in a place, where the track 7 enters into the contour of the socket 4, meaning in the path L, thus the rod-like product is elevated by track 7 and rolled over its' contact surface 8. This has a particular significance in a case of a configuration where rod-like products are kept inside slots not only by effect of gravitation force but also by vacuum.

In this embodiment, the device 1 is provided with the conveyor 2 being a transport belt 3 comprising three parts 3a, 3b 3c basically parallel to each other, and separated by gaps 9. The socket 4 moving a rod-like product shall comprises three sockets 4a, 4b, 4c situated respectively on three parts of transport belt 3a, 3b, 3c. Sockets 4a, 4b, 4c are placed coaxially to each other in order to enable movement of the rod-like product, which shall be placed and rolled within three sockets 4a, 4b, 4c.

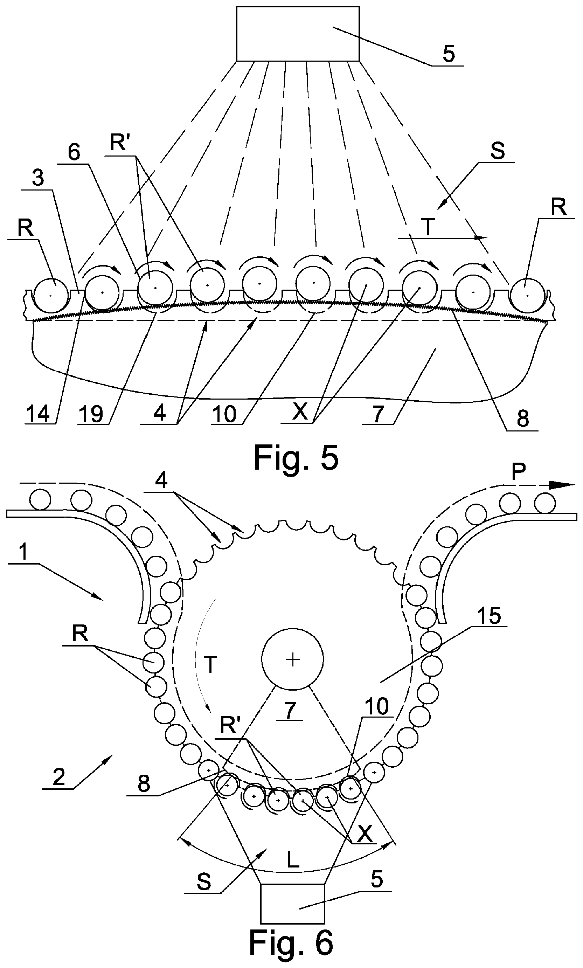

Two stationary tracks 7 parallel to each other, are placed in gaps 9 between parts 3a, 3b. 3c of the transport belt 3, lengthwise to the transport direction T. The term stationary means that the tracks are stationary in relation to the scanning device 5, they are provided with no drive and they are not changing their spatial position. Tracks 7 are adopted to extend above the bottom surface 19 of the transport socket 4 due to the shape of the contact surface 8, which exemplary can have a form of a cylinder segment as in fig.5. For example, the track contact surface 8 can extend above the bottom surface 19 of the transport socket 4 in the scanning area S of the audit trail, so that during the quality check of a rod-like product R, R', the rod-like product is lifted above the bottom surface 19 of the socket 4 in a direction away from the bottom 19.

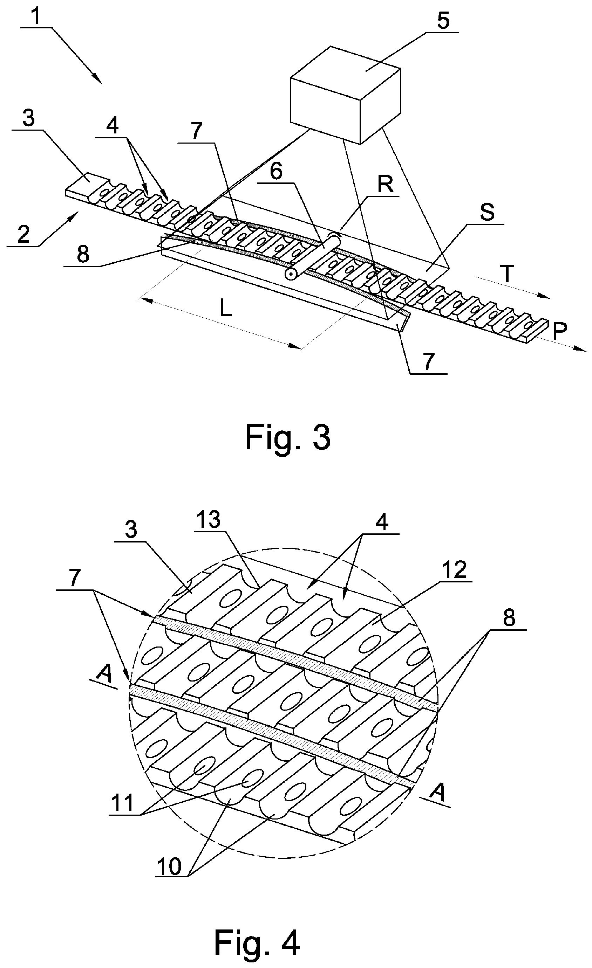

The use of two tracks 7 for rotation of a rod-like product 7 provides a more stable support for the product during the rotation and increases traction between the tracks 7 and the circumferential surface of the rod-like product R. Other embodiments of the invention are also possible, where for example tracks 7 will be placed on the opposite lateral sides of the belt 3 as presented in fig. 3. In this embodiment the end parts of rod-like products R, are rolled over the contact surface 8 of tracks 7.

It is also possible to use a single track of a greater width, which will be placed in a way enabling lifting of a rod-like product in a socket, and after lifting, end parts of the rod-like products will bent below the contact surface of the track. The track shall stay in contact with the lateral surface of the rod-like product, in location where the centre of gravity of the rod-like product is located.

Fig. 4 presents in an enlargement tracks 7 with an example of a toothed contact surface 8. The contact surface 8 or the entire track 7 can be made of rubber or plastic with such geometrical or material parameters, where the movement of a rod-like product on the track's surface will create resistance or friction greater than friction against the socket surface, thus causing a rotation of the rod-like product around its' longitudinal axis and rolling on tracks within the moving socket. Friction coefficient shall be high enough to rotate rod-like products R moved in slots 4. In order to ensure better adhesion of product R to socket 4 openings 11 providing vacuum to the socket 4 may be placed in bottom 10. Openings 11 can be alternatively placed in lateral walls 12, 13 of the socket 4.

Fig. 5 presents a cross-section of a transport belt 3 along the line A-A in a side view;

Rod-like products R have been shown as placed in slots 4 in order to explain better the function of the track 7.

During the movement of the transport belt 3 with rod-like products R placed in slots 4 in a direction T, at least one track 7 is introduced in slots 4 from the bottom side 10. In this embodiment, the track 7 is stationary however it is possible to use the moving track for example in the form rotational roller or cam interacting with an endless belt.

During the movement of transport belt 3 outside scanning area S of scanning device 5, rod-like products R rest still in slots 4, supported by the bottom 10 of sockets. When the track 7 is being introduced gradually into the socket 4 from the bottom side 10, rod-like products R' are rolled in the direction T by the socket wall 14, due to interaction of the lateral surface 6 of the rod-like product R' with the contact surface 8 of the track, rod-like products R' rotate around their own longitudinal axis X towards the direction corresponding the movement direction T. Thereby they roll with their circumferential surface 6 on the contact surface 8 of track 7, remaining all the time at least partially in socket 4.

The contact surface 8 of the track 7 shall have a high friction coefficient which will be greater from the friction coefficient of socket wall 14 and will enable rotation of product R'. Alternatively, the track contact surface 8 can have a shape creating resistance forces for sliding movement greater than the friction coefficient of socket wall 14, which in this case it also enables rotation of the rod-like product R'. Rod-like products R' are rolled on the contact surface 8 of the track 7 in path L of the transport belt 3, this path corresponds the length on which the contact surface 8 is at least partially inside the socket 4, and above the bottom 10. The length of path L shall be equal or greater to the rod circumference L ≥ 2πr, where r equals the radius of the rod-like product. Advantageous, when the length of the path L≥ 4πr.

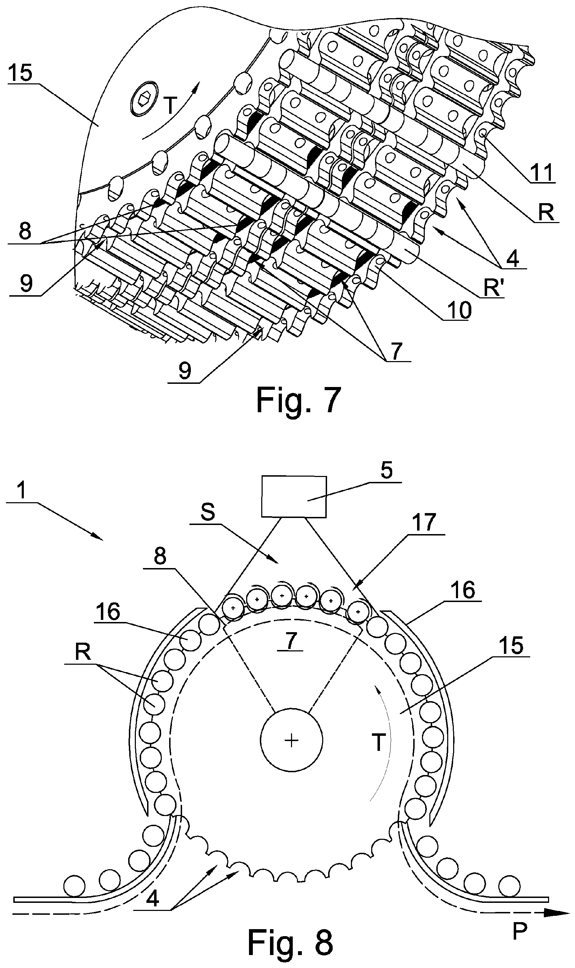

Fig. 6 presents the second embodiment of the device 1 for checking the quality of rod-like products R with conveyor 2 in form of a transport drum 15 and scanning device 5 placed along the audit trail P of products R, below the transport drum 15. The audit trail P has been marked with a dotted line. The transport drum 15 is provided with slots 4 adopted to move rod-like products R oriented crosswise to the direction of their movement T. Slots 4 have form of long grooves placed on the circumferential surface of the transport drum 15, basically crosswise to the direction of movement T and to drum revolution and are partially opened in order to receive and transfer rod-like products R. Usually the transport drums are provided with slots 4, to which the vacuum is applied in order to hold transported products R during revolution of a drum 15. During revolution of the drum 15, in the scanning area S, into sockets 4 the track 7 is introduced from a direction of the bottom side 10, so that the contact surface 8 is placed at least partially within the contour of the socket 4. Rod-like products R' in slots 4, where the track 7 was introduced, are lifted from the bottom 10 of the socket 4 and though the interaction of the track 7 with side surface 6 of rod-like products R', they are rotated around their longitudinal axis X. Products R' rotate in slots around their longitudinal axis X on path L of circumferential surface of drum 15, which equals the length of contact surface 8 of track 7 placed at least partially within sockets 4. When product R' is separated from the bottom 10 through the introduction of the track 7 within the contour of socket 4, the rod-like product is still situated within the contour of the socket 4 through the attraction towards bottom 10 created by vacuum supplied into openings 11 as presented in fig.7. The attraction force on the product R' towards bottom 10 depends on the value of the supplied vacuum. The attraction force has to be strong enough to sustain product R' within the socket 4, when the track 7 is introduced, but also enabling a complete rotation and rolling over the contact surface 8 of the track 7. During drum revolution 15 in the direction T, rod-like products R placed in sockets 4 are sustained by vacuum supplied to the socket through openings 11 and are attracted towards the bottoms 10 of sockets 4. In a place where on audit trail P of product R, the track 7 begins to enter into the socket 4, product R' engages with the contact surface 8, therefore becomes separated from the bottom 10 and lifted, and as a result of friction or resistance forces between lateral surface 6 of rod-like products R, it rolls over the contact surface 8 to the place, where the track 7 exits sockets 4. During the entire time from entering of the track 7 into socket 4, during the roll over the contact surface 8, until the exit of the track from socket 4, product R' remains at least partially within the same socket. After finishing the rolling, product R is drawn by vacuum towards the bottom 10 of the socket 4 and as there is no interaction with the track, it becomes still, due to friction force between rod-like products and socket walls 4, rod-like product remains still within the socket 4.

The scanning device 5 may also be placed over the transport drum 15, as presented in fig. 8. In this embodiment an attraction force towards the bottom 10 of the socket 4 may equal gravitation force, affecting products R. Moreover slots 4 may be free of openings supplying vacuum to sockets 4 and products R are sustained within sockets 4 by a coat 16. The drum 15 may have the coat 16 sustaining products R with a window 17 for scanning lateral surface 6 of products R within the scanning area S. In this embodiment, friction or geometrical parameters of the track 7 are chosen to overcome the friction force both by the socket 4 as well as the coated surface 16 affecting rod-like products, to enable rolling of rod-like products on the track.

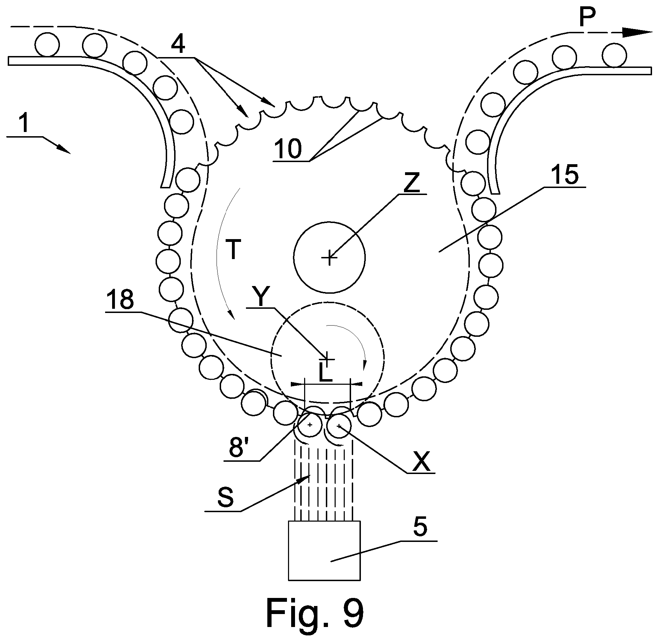

The track 7 may be a stationary element as presented on fig. 1 - 8, or a movable element as presented on fig. 9.

Defining the track as movable relates to the possibility of changing the location of a point on its contact surface 8' in respect to the scanning device 5. The movable track may be a roller, shaft, belt or another element, which contact surface changes its' spatial position. In this embodiment the track 7 is a rotating roller 18, which rotates around axis Y, contrary to revolutions of the transport drum 15. Axis Y of the track 7' is placed within the internal contour of drum 15, basically parallel to axis Z of drum 15. The circumferential surface of roller 18 is the contact surface 8', which enters from the bottom side 10 into the socket 4. Path L of circumferential surface of roller 18, placed with slots 4, in this embodiment may be shorter than the length of circumference of product R, because revolution of roller 18 in a direction contrary to revolutions of drum 15 causes that rod-like product R rotates faster around its longitudinal axis X than when rolled on a stationary track presented on fig. 1-8.

## Claims

1. A method for checking quality of rod-like products (R, R') for the tobacco industry, comprising steps of
moving rod-like products (R, R') placed in a transport socket (4) of a conveyor (2) along an audit trail (P),
checking the quality of a rod-like products (R, R') with a scanning device (5) placed on the audit trail (P),
**characterized in that** it further comprises
rotating the rod-like product (R, R') placed in the transport socket (4), during the step of checking the quality of rod-like products (R, R') in the scanning area (S) of the scanning device (5), using at least one track (7) interacting with a lateral surface (6) of the rod-like products (R, R')
wherein the step of checking the quality of rod-like products (R, R'), further comprises pushing out rod-like products (R, R') above the bottom surface (19) of the socket (4) from the bottom (10) by the track (7).

2. The method according to claim 1, **characterized in that** the track (7) interacts through friction with the lateral surface (6) of the rod-like product (R, R') from the bottom side (10) of the transport socket (4).

3. The method according to claims 1 or 2, **characterized in that** the rod-like product (R, R') placed in the transport socket (4) rotates by at least 360° around its longitudinal axis (X).

4. The method according to claims 1, 2 or 3 **characterized in that** when checking the quality of rod-like product (R, R'), the rod-like product shall be sucked in by the vacuum provided by the openings (11) in transport sockets (4) of the conveyor (2).

5. The method according to claims 1, 2, 3, or 4 **characterized in that** the checking the quality of rod-like products (R, R') is done using a scanning device (5) in a form of camera, scanner or other device recording a plurality of images of rod-like products at different angle positions during the rolling of rod-like products on the track (7).

6. A device for checking quality of rod-like products (R, R') for the tobacco industry comprising:
a conveyor (2) provided with transport sockets (4) for moving rod-like products (R, R') along the audit trail (P),
a scanning device (5) for checking the quality of the rod-like product (R, R') moving along the audit trail (P),
**characterized in that**
the device (1) is provided with at least one track (7) adopted to rotate rod-like products (R, R') in the socket (4) of the conveyor in the scanning area (S) of the scanning device (5), through interaction with a circumferential surface (6) of the rod-like product (R, R'),
wherein
in the scanning area (S), the contact surface (8) of the track (7) protrudes over the bottom surface (19) of transport socket (4).

7. The device according to claim 6 **characterized in that** the scanning device (7) is in a form of camera, scanner or other image recording device.

8. The device according to claims 6 or 7 **characterized in that** the track (7) is stationary in relation to the scanning device (5).

9. The device according to claims 6 or 7 **characterized in that** the track (7) is movable in relation to the scanning device (5).

10. The device according to any of claims 6, 7, 8 or 9 **characterized in that** the track (7) is provided with a contact surface (8) of high friction coefficient interacting through friction with a circumferential surface (6) of rod-like products (R, R') preventing rod-like products from sliding during the rotation.

11. The device according to claim 10 **characterized in that** the contact surface (8) is toothed or made of rubber.

12. The device according to any of claims 6 to 11 **characterized in that** the conveyor (2) is a transport belt or a drum.

13. The device according to any of claims 6 to 12 **characterized in that** the transport socket (4) is provided with at least one opening (11) feeding the vacuum to keep the rod-like product (R, R') in the transport socket (4).

## Patentansprüche

1. Ein Verfahren zur Qualitätskontrolle von stabförmigen Produkten (R, R') für die Tabakindustrie, das die folgenden Schritte umfasst:
Bewegen von stabförmigen Produkten (R, R'), die in einem Transportstutzen (4) eines Förderers (2) platziert sind, entlang einer Prüfstrecke (P),
Prüfen der Qualität der stabförmigen Produkte (R, R') mit einer Scanvorrichtung (5), die auf dem Prüfpfad (P) positioniert ist,
**dadurch gekennzeichnet, dass** es ferner umfasst:
Drehen des stabförmigen Produkts (R, R'), welches im Transportstutzen (4) platziert ist, während der Qualitätskontrolle der stabförmigen Produkte (R, R') in dem Scanbereich (S) der Scanvorrichtung (5) unter Verwendung mindestens einer Bahn (7), die mit einer Seitenfläche (6) der stabförmigen Produkte (R, R') interagiert,
wobei der Schritt der Qualitätskontrolle der stabförmigen Produkte (R, R') ferner Herausschieben der stabförmigen Produkte (R, R') über die Bodenfläche (19) des Stutzens (4) vom Boden (10) durch die Bahn (7) umfasst.

2. Das Verfahren nach Anspruch 1, ist **dadurch gekennzeichnet, dass** die Bahn (7) durch Reibung mit der Seitenfläche (6) des stabförmigen Produkts (R, R') interagiert und zwar ausgehend von der Unterseite (10) des Transportstutzens (4).

3. Das Verfahren nach einem der Ansprüche 1 oder 2 ist **dadurch gekennzeichnet, dass** das in den Transportstutzen (4) eingesetzte stabförmige Produkt (R, R') um mindestens 360° um seine Längsachse (X) rotiert.

4. Das Verfahren nach einem der Ansprüche 1, 2 oder 3 ist **dadurch gekennzeichnet, dass** das stabförmige Produkt (R, R') während der Qualitätskontrolle durch den Unterdruck angesaugt wird, der durch die Öffnungen (11) in den Transportstutzen (4) des Förderers (2) entsteht.

5. Das Verfahren nach einem der Ansprüche 1, 2, 3 oder 4 ist **dadurch gekennzeichnet, dass** die Qualitätkontrolle der stabförmigen Produkte (R, R') unter Verwendung einer Scanvorrichtung (5) in Form einer Kamera, eines Scanners oder einer anderen Vorrichtung erfolgt, die während des Rollens der stabförmigen Produkte auf der Bahn (7) eine Vielzahl von Bildern der stabförmigen Produkte aus verschiedenen Winkeln aufnimmt.

6. Eine Vorrichtung zur Qualitätskontrolle von stabförmigen Produkten (R, R') für die Tabakindustrie, das umfasst:
einen Förderer (2), der mit Transportstutzen (4) versehen ist, um stabförmige Produkte (R, R') entlang des Prüfpfades (P) zu bewegen,
eine Scanvorrichtung (5) zur Qualitätskontrolle des stabförmigen Produkts (R, R'), das sich entlang des Prüfpfads (P) bewegt,
**dadurch gekennzeichnet, dass**
die Vorrichtung (1) mit mindestens einer Bahn (7) versehen ist, die dazu eingerichtet ist, durch Zusammenwirken mit einer Umfangsfläche (6) des stabförmigen Produkts (R, R') stabförmige Produkte (R, R') in dem Stutzen (4) des Förderers in dem Scanbereich (s) der Scanvorrichtung (5) zu drehen,
wobei
im Scanbereich (S) die Kontaktfläche (8) der Bahn (7) über die Bodenfläche (19) des Transportstutzens (4) vorsteht.

7. Die Vorrichtung nach Anspruch 6 ist **dadurch gekennzeichnet, dass** die Scanvorrichtung (5) als Kamera, Scanner oder andere Bildaufnahmevorrichtung vorliegt.

8. Die Vorrichtung nach Anspruch 6 oder 7 ist **dadurch gekennzeichnet, dass** die Bahn (7) in Relation zu der Scanvorrichtung (5) ortsfest ist.

9. Die Vorrichtung nach Anspruch 6 oder 7 ist **dadurch gekennzeichnet, dass** die Bahn (7) in Relation zu der Scanvorrichtung (5) beweglich ist.

10. Die Vorrichtung nach einem der Ansprüche 6, 7, 8 oder 9 ist **dadurch gekennzeichnet, dass** die Bahn (7) mit einer Kontaktfläche (8) mit hohem Reibungskoeffizienten versehen ist, die durch Reibung mit einer Umfangsfläche (6) von stabförmigen Produkten (R, R') zusammenwirkt und verhindert, dass stabförmige Produkte während der Drehung verrutschen.

11. Die Vorrichtung nach Anspruch 10 ist **dadurch gekennzeichnet, dass** die Kontaktfläche (8) gezahnt ist oder aus Gummi besteht.

12. Die Vorrichtung nach einem der Ansprüche 6 bis 11 ist **dadurch gekennzeichnet, dass** der Förderer (2) ein Transportband oder eine Trommel ist.

13. Die Vorrichtung nach einem der Ansprüche 6 bis 12 ist **dadurch gekennzeichnet, dass** der Transportstutzen (4) mit mindestens einer Öffnung (11) versehen ist, die das Vakuum speist, um das stabförmige Produkt (R, R') im Transportstutzen (4) zu halten.

## Revendications

1. Une méthode pour contrôler la qualité des produits en forme de tige (R, R') pour l'industrie du tabac, comprenant les étapes de
produits en forme de tige mobiles (R, R') placés dans une douille de transport (4) d'un convoyeur (2) le long d'un tapis de contrôle (P),
contrôlant la qualité du produit en forme de tige (R, R') avec un dispositif de scan (5) placé sur le tapis de contrôle (P),
**caractérisé en ce qu'**il comprend en outre
faisant tourner le produit en forme de tige (R, R') placé dans la douille de transport (4), lors de l'étape de contrôle de la qualité des produits en forme de tige (R, R') dans la zone de scan (S) du dispositif de scan (5), utilisant au moins une piste (7) interagissant avec une surface latérale (6) des produits en forme de tige (R, R')
dans laquelle l'étape du contrôle de la qualité des produits en forme de tige (R, R'), comprend en outre l'action de pousser les produits en forme de tige (R, R') au-dessus de la surface inférieure (19) de la douille (4) depuis le fond (10) par la piste (7).

2. La méthode selon la revendication 1, **caractérisée en ce que** la piste (7) interagit par friction avec la surface latérale (6) du produit en forme de tige (R, R') depuis le côté inférieur (10) de la douille de transport (4).

3. La méthode selon les revendications 1 ou 2, **caractérisé en ce que** le produit en forme de tige (R, R') placé dans la douille de transport (4) pivote à un angle d'au moins 360° autour de son axe longitudinal (X).

4. La méthode selon les revendications 1, 2 ou 3 **caractérisée en ce que**, lors du contrôle de la qualité du produit en forme de tige (R, R'), le produit en forme de tige est aspiré par le vide d'air fourni par les ouvertures (11) dans les douilles de transport (4) du convoyeur (2).

5. La méthode selon les revendications 1, 2, 3, ou 4 **caractérisée en ce que** le contrôle de la qualité du produit en forme de tige (R, R') est effectué à l'aide d'un dispositif de scan (5) sous la forme d'une caméra, d'un scanner ou d'un autre dispositif enregistrant plusieurs images des produits en forme de tige sous des positions d'angle différentes pendant le roulement des produits en forme de tige sur la piste (7).

6. Un dispositif pour le contrôle de la qualité de produits en forme de tige (R, R') pour l'industrie du tabac comprenant :
un convoyeur (2) fourni avec des douilles de transport (4) pour déplacer des produits en forme de tige (R, R') le long du tapis de contrôle (P),
un dispositif de scan (5) pour contrôler la qualité du produit en forme de tige (R, R') se déplaçant sur le tapis de contrôle (P),
**caractérisé en ce que**
le dispositif (1) est fourni avec au moins une piste (7) adaptée pour faire pivoter les produits en forme de tige (R, R') dans la douille (4) du convoyeur dans la zone de scan (S) du dispositif de scan (5), au moyen d'une interaction avec une surface circonférentielle (6) du produit en forme de tige (R, R'),
dans lequel
dans la zone de scan (S), la surface de contact (8) de la piste (7) fait saillie au-dessus de la surface inférieure (19) de la douille de transport (4).

7. Le dispositif selon la revendication 6 **caractérisé en ce que** le dispositif de scan (5) se présente sous la forme d'une caméra, d'un scanner ou d'un autre dispositif d'enregistrement d'images.

8. Le dispositif selon les revendications 6 ou 7 **caractérisé en ce que** la piste (7) est stationnaire par rapport au dispositif de scan (5).

9. Le dispositif selon les revendications 6 ou 7 **caractérisé en ce que** la piste (7) est mobile par rapport au dispositif de scan (5).

10. Le dispositif selon l'une quelconque des revendications 6, 7, 8 ou 9 **caractérisé en ce que** la piste(7) est fournie avec une surface de contact (8) d'un coefficient de friction élevé interagissant par friction avec une surface circonférentielle (6) des produits en forme de tige (R, R'), empêchant les produits en forme de tige de glisser pendant la rotation.

11. Le dispositif selon la revendication 10 **caractérisé en ce que** la surface de contact (8) est dentée ou fabriquée en caoutchouc.

12. Le dispositif selon l'une quelconque des revendications 6 à 11 **caractérisé en ce que** le convoyeur(2) est une bande transporteuse ou un rouleau.

13. Le dispositif selon l'une quelconque des revendications 6 à 12 **caractérisé en ce que** la douille de transport (4) est fournie avec au moins une ouverture (11) alimentant l'aspiration permettant de maintenir le produit en forme de tige (R, R') dans la douille de transport (4).
